# EUROPEAN PATENT SPECIFICATION

(11) **EP 1 462 039 B1**
(45) Date of publication and mention of the grant of the patent: **11.07.2007**
(21) Application number: 04251753.2
(22) Date of filing: 25.03.2004
(51) Int. Cl.: A47J 27/21

(54) **Electric liquid boiling apparatus**
Elektrisches Gerät zum Kochen von Flüssigkeiten
Appareil électrique pour porter à ébullition des liquides

(30) Priority: 25.03.2003 GB 0306831
(43) Date of publication of application: 29.09.2004
(73) Proprietor: STRIX LIMITED, Ronaldsway, Isle of Man IM9 2RG (GB)
(72) Inventor: Garvey, Vincent Joseph, Douglas Isle of Man IM1 BD (GB)
(74) Representative: Leckey, David Herbert

(56) References cited:
- WO-A-00/47095
- WO-A-01/80698
- WO-A-97/04694
- GB-A- 1 095 161

## Description

The present invention relates to liquid boiling appliances, in particular water boiling appliances such as kettles and hot water jugs, and having electric heating means provided on the base of the liquid heating chamber of the appliance. The heating means may, for example, comprise a sheathed electric heating element bonded to the underside of the chamber base, for example through a thermal diffusion member, or a thick film element printed onto or attached to the base of the chamber. Such appliances are well known in the art, and are described, for example, in WO 96/18331.

Traditionally water boiling appliances comprise a steam sensitive switch which switches off or reduces the power of the appliance heater when water in the appliance boils. Such controls typically comprise a temperature sensitive actuator, such as a bimetallic actuator, which is suitably arranged in fluid communication with the heating chamber. When water in the chamber boils, the steam generated is brought into contact with the actuator which then operates a control.

More recently, there have been proposals for non-steam sensitive boiling controls. In two such proposals, namely the applicant's WO 97/04694 and WO02/085169, the base of the heating chamber is provided with a relatively small volume sump against the external base of which is located a thermally sensitive actuator. When water in the chamber is heating, the temperature of the water in the sump lags behind the bulk water temperature, but upon boiling the temperature of the water in the sump rises quickly as it is displaced by boiling water. This rise in temperature is sensed by the actuator which operates the control.

GB-A-1 095 161 discloses a bimetallically operable temperature sensing unit arranged to respond to the temperature of water in a pocket in the base of a vessel or in a cup carried on the side of a vessel.

There are, however, a number of potential limitations with the arrangements disclosed in the above proposals.

Firstly, due to the proximity of the sump to the heating means of the appliance, the ambient temperature in the region of the sump will be hot, and not facilitate a quick reset time for the actuator after it has operated. This means that it may be difficult to reboil water quickly after the boiling control has operated as the actuator will not have reset.

Secondly, the sumps which have been proposed have taken the form of a cup which is suitably formed in or attached to the chamber base. This imposes certain design and manufacturing constraints on the designer.

The present invention seeks to overcome or ameliorate these problems.

The present invention provides an electric water heating appliance, said appliance having a water heating chamber having a heated base, said base being provided with a channel extending around at least a part of its outer periphery, and a thermally sensitive actuator mounted in thermal contact with a wall of said channel and operable in the event of liquid in the vessel boiling. WO 01/80698 discloses on appliance having a heated base provided with a peripheral channel, but without said thermally sensitive actuator thereon.

Thus in accordance with the invention, a thermally sensitive actuator is placed in thermal contact with a channel which extends around at least a part of the periphery of the heated base. In such an arrangement, the outside wall of the channel may be exposed to an ambient temperature at, or close to, room temperature, and the heat transfer efficiency may be higher as convective air currents can be generated by the outer channel wall, meaning that the water will cool more quickly than in a cup-like sump, allowing the actuator to reset more quickly.

Further, as the well is formed at the periphery of the base, it can more easily be made with a high surface area, meaning that heat can be collected over a larger area, providing rapid heating of the actuator once turbulent boiling has begun, leading to rapid operation of the actuator.

Also, the channel may be more easily manufactured than the existing sump proposals.

Preferably, the channel has a depth to radial width ratio of greater than one, preferably greater than 3, more preferably greater than 5.

Preferably, the channel has a width at its top of less than 10% and most preferably less than 5% of the base diameter. Such a relatively narrow opening can be used to restrict pre-boil mixing of water within the heating chamber.

The actuator may be mounted directly onto or against the walls of the channel. However, this may be difficult to achieve, so in the preferred embodiment, the actuator is mounted on or against a heat bridge which is attached to one or more walls of the channel.

Preferably the heat bridge member is of a high thermal conductivity material such as copper or aluminium and it may be bonded, for example brazed or welded, to the channel wall(s).

Advantageously the heat bridge member will be shaped to follow the shape of the actuator to maximise heat transfer thereto.

It will be recognised that the radially outer wall of the channel or the bottom of the channel will be cooler than the inner wall, as they are more distant from the heating means. It is therefore advantageous to mount the actuator or heat bridge in contact with one or both of these regions, rather than the channel inner wall.

To facilitate cooling of the channel after boiling, the channel may be provided with a cooling member attached thereto in the region of the actuator.

In one embodiment, the heat bridge member is provided with a part which is spaced from a wall of the channel so as to allow heat to dissipate therefrom.

In an alternative embodiment, however, a separate cooling member may be provided. This may be advantageous as it means that the heat bridge for conducting heat to the actuator and the cooling member may have different thermal capacities. In this way, the heat bridge may be configured to allow heat to be transferred rapidly to the actuator so as to allow swift operation thereof upon boiling of water in the appliance while the cooling member can be configured to provide rapid cooling after operation of the actuator.

Such an arrangement has application not only to the above described embodiments which employ a peripheral channel as a sump, but also to other sump arrangements as described in WO 97/04694 and WO02/085169 for example.

The two members may have different surface areas, thicknesses and so on to provide the necessary performance.

Preferably the actuator is a bimetallic actuator, more preferably a snap acting actuator of the type disclosed in GB 1,542,252. These are well known in the art and need not be discussed further.

The actuator is preferably part of a thermally sensitive control unit. In one example, this may be a standard steam switch unit such as the Applicant's R48 control units. In the preferred embodiment, however, the actuator is part of an integrated control and connector system such as one of the Applicant's U18 series of products. The latter and their basic mode of operation are described in WO 95/34187, whose disclosure is hereby incorporated by reference.

In both these controls, the actuator operates to trip a trip lever in the control to open a set of contacts, the effect of which is to switch off or reduce the power of the heating means.

The channel can be a continuous channel and extend around the entire periphery of the base. It has been found, however, that circumferential flow currents may be set up within the channel, which potentially flushes cooler water from the channel during heating and thus give rise to premature operation of the actuator. To prevent this effect, the channel may be formed so as to extend only partially around the periphery of the base, or may be provided with one or more baffles arranged within the channel to disrupt the formation of these currents.

The channel may be formed in any suitable manner. For example, it may be formed in a one-piece base, e.g. by drawing or pressing. Alternatively, it may be fabricated for example by attaching an outer wall to an L-shaped flange formed in the base of the heating chamber. The outer wall may be of the same or of a different material to the rest of the base. For example the base may be stainless steel, and the outer wall be stainless steel, glass or plastics. Preferably, however, the channel is preformed in the base prior to assembly of the appliance.

Some preferred embodiments of the invention will now be described by way of example only with reference to the accompanying drawings in which:
Figure 1 shows a bottom view of a part of an appliance in accordance with the invention;
Figure 2 shows a sectional view through Figure 1 along the line II-II;
Figure 3 shows a alternative embodiment of the invention;
Figure 4 shows a further embodiment of the invention; and
Figure 5 shows a further embodiment of the invention.

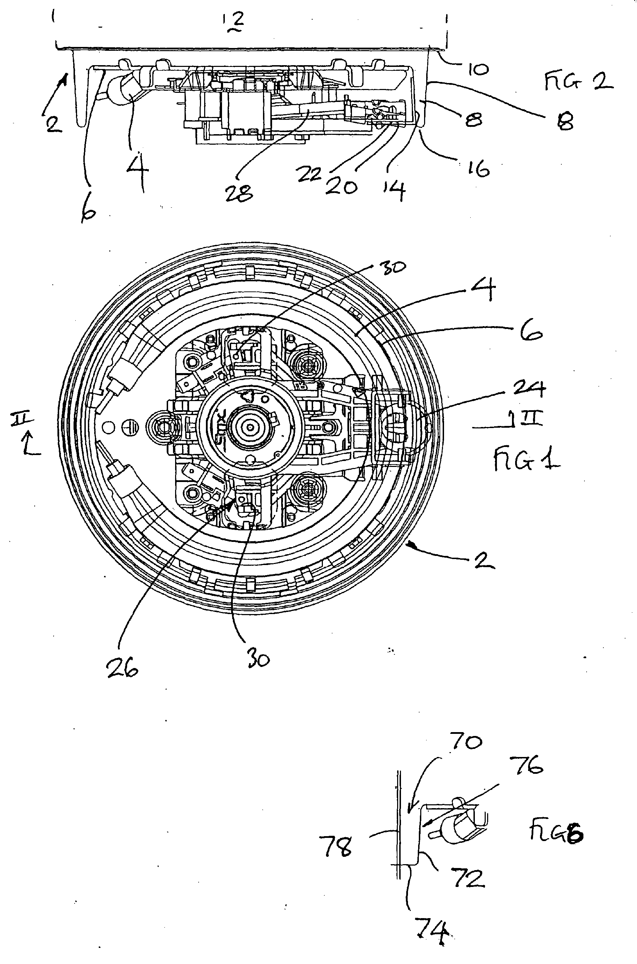

With reference to Figure 1, a liquid heating appliance such as a kettle or a hot water jug is provided with a heated base 2 made, typically, from a stainless steel material.

The base 2 is provided with a sheathed electric heating element 4 which is attached to the base 2 through a thermal diffusion plate 6 in a known manner. Such constructions are, *per se,* well known and need not be described further here.

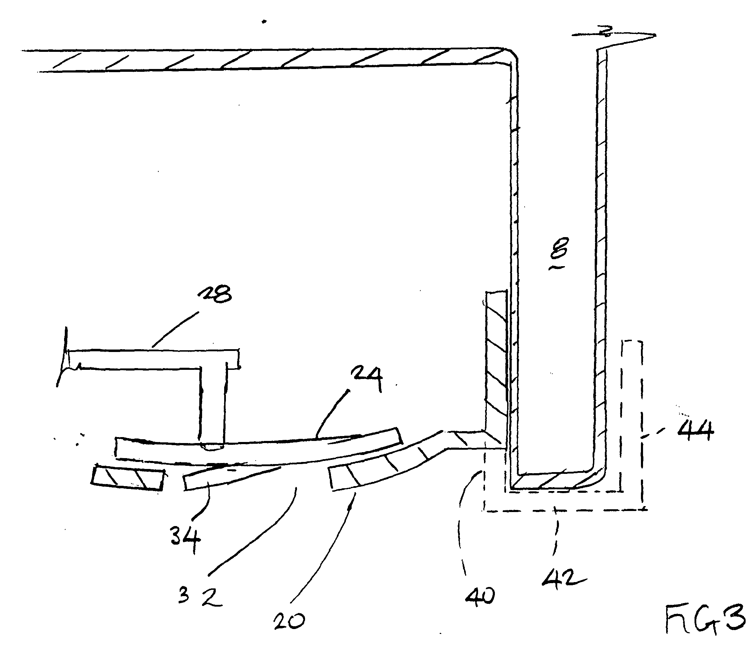

The base 2 is provided with a peripheral channel 8 which extends around the entire periphery of the base 2. The channel 8 has, at its upper end, a flange 10 which may be used to mount the base 2 in the bottom of the liquid heating chamber 12 of the appliance, as shown schematically in Figure 2. Alternatively, the base 2 may form an integral part of the base 2 of the liquid heating chamber 12.

The channel 8 has an inner wall 14, a bottom wall 16 and an outer wall 18. Bonded e.g. brazed to the inner wall 14 of the channel 8 is a generally L-shaped heat bridge member 20 of copper or other highly thermally conductive material. The lower limb 22 of the heat bridge 20 sits under, and is in good thermal contact with, the bimetallic actuator 24 of a thermally sensitive control unit 26. In this embodiment, the control unit 26 is one of the Applicant's U18 series of products. These comprise a trip lever 28 which is operated on by the actuator 24 to open sets of contacts 30 in the control unit 22. Such control units are well known in the art and further details need not be given here.

In operation, as water in the heating chamber 12 is heated by the heating element 4 through the base 2, the temperature of the water in the peripheral channel 8 lags behind that of the main body of liquid. However, when boiling occurs, the relatively cool water within the channel 8 is displaced such that the temperature of the channel wall 14 rises relatively quickly. This rise in temperature is transmitted to the bimetallic actuator 24 which, upon reaching its operating temperature (typically 90 to 95 C), will operate to trip the trip lever 28 and disconnect the power supply to the heating element 4.

As liquid in the channel 8 cools, the actuator 24 will eventually re-set allowing the heater to be re-energised.

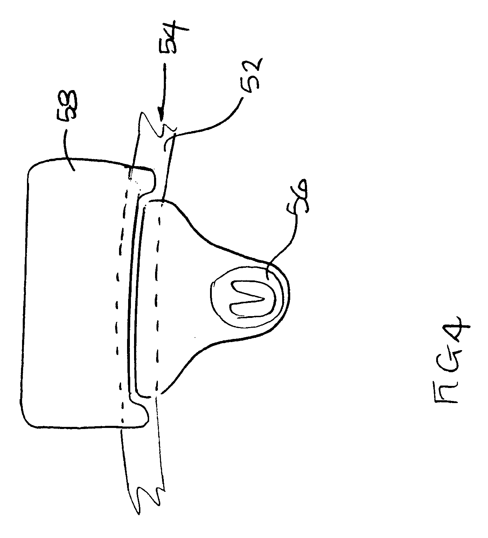

The arrangement of the bimetallic actuator 24 is shown in greater detail in Figure 3. From this it will be seen that the heat bridge 20 is formed with an aperture 32. The heat bridge 20 receives the bimetallic actuator 24 of the control 26 and is shaped generally to have the same curvature as the actuator 24. The aperture 32 in the heat bridge is provided to accommodate the central tongue 34 of the actuator, which is a snap acting actuator, as is well known in the art. As will be seen, when the actuator 24 changes curvature, its tongue 34 will be pressed upwardly on the trip lever 28 of the control unit 26 so as to open the contacts 30.

As shown in dotted lines in Figure 3, the heat bridge member 20 may extend around more than one wall of the channel 8. For example, it may be generally U-shaped having limbs 40, 42 and 44. Preferably at least the limb 42 is mounted to the lower wall 16 of the channel 8. Most preferably the limb 44 is spaced from the outer wall 18 so that it acts to dissipate heat from the channel 8 once the control has operated so as to accelerate re-setting of the actuator 24.

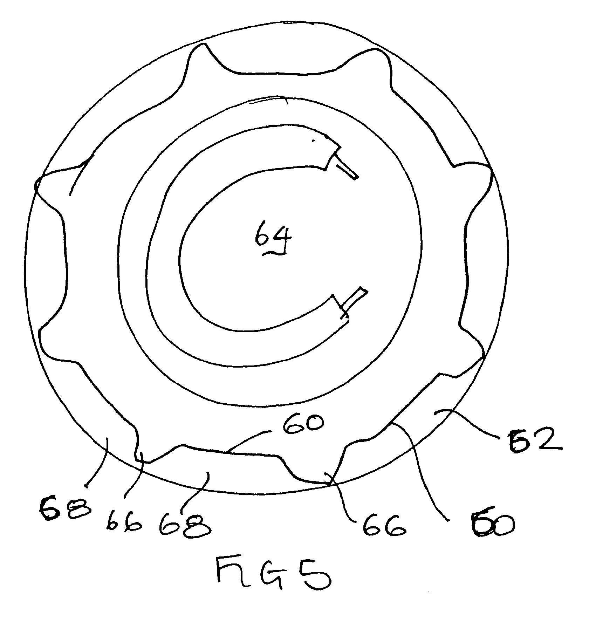

In Figure 4, a further embodiment of the invention is shown. In this embodiment, a heat bridge member 50 is attached to the bottom wall 52 of a channel 54 formed in the periphery of the base of a heating chamber. As in the earlier embodiment, a snap acting bimetallic actuator 56 of a control unit is arranged in good thermal contact with the heat bridge 50. A cooling member 58 is also attached to the wall 52 of the channel 54, as shown.

This arrangement is advantageous as it allows the actuator 56 to be heated rapidly once boiling occurs in the chamber, without the cooling member 58 holding back that heating significantly. Once the actuator has operated, the cooling member 58 (which will not have risen in temperature as much as the heat bridge 52) will assist in cooling the region of the heat bridge 52 rapidly and allow rapid reset of the actuator 56.

Referring to Figure 5 now, there is shown a further arrangement in accordance with the invention.

In this arrangement, the inner wall 60 of a channel 62 formed in a heated base 64 is provided with a plurality of projections 66 which divide the channel 62 into a number of smaller sections 68. Thus acts to prevent circumferential currents from establishing themselves in the channel 62 thereby possibly leading to premature operation of the control 66. Although shown as being formed integrally with the inner wall 60 of the channel 62, the projections 66 could be separate baffle members inserted into the channel 62.

With reference to Figure 6, it will be seen that a channel 70 need not be made in one piece. In this example, the inner wall and lower wall 72, 74 of the channel 70 are provided by a depending flange 76 of a heater which forms the base of the water boiling chamber of the appliance while the outer wall 78 of the channel is provided by a separate member which is suitably joined to the lower wall 74 of the flange 76 to define the channel 70.

## Claims

1. An electric water heating appliance, said appliance having a water eating chamber (12) having a heated base (2), said base (2) being provided with a channel (8;54;62) extending around at least a part of its outer periphery, **characterised by** a thermally sensitive actuator (24; 56) mounted in thermal contact with a wall (14,16,18) of said channel (8;54;62) and operable in the event of liquid in the appliance boiling.

2. An appliance as claimed in claim 1 wherein the channel (8; 54; 62) has a depth to radial width ratio of greater than one, preferably greater than 3, more preferably greater than 5.

3. An appliance as claimed in claim 1 or 2 wherein the channel (8;54;62) has a width at its top of less than 10%, and more preferably less than 5% of the base diameter.

4. An appliance as claimed in any preceding claim wherein the actuator (24) is mounted directly onto or against the walls (14,16,18) of the channel.

5. An appliance as claimed in any of claims 1 to 3 wherein the actuator (24; 56) is mounted on or against a heat bridge (20;50) which is attached to one or more walls (14,16,18) of the channel (8; 54; 62).

6. An appliance as claimed in claim 5 wherein the heat bridge member (20; 50) is of a high thermal conductivity material, for example copper or aluminium.

7. An appliance as claimed in claim 6 wherein the heat bridge member (20;50) is bonded, for example brazed or welded, to the channel wall(s) (14, 16, 18).

8. An appliance as claimed in claim 6 or 7 wherein the heat bridge member (20;50) is shaped to follow the shape of the actuator (24;56).

9. An appliance as claimed in any of claims 4 to 8 wherein the actuator (24;56) or heat bridge (20;50) is arranged in contact with one or both of the bottom or radially outer walls (16;18;52) of the channel (8;54;62).

10. An appliance as claimed in any preceding claim wherein the channel (54) is provided with a cooling member (58) attached thereto in the region of the actuator (56).

11. An appliance as claimed in claim 10 as dependent directly or indirectly upon claim 5 wherein the heat bridge member (50) is provided with a part which is spaced from a wall of the channel (54) so as to allow heat to dissipate therefrom.

12. An appliance as claimed in claim 10 as dependent directly or indirectly upon claim 5 wherein a separate cooling member is provided.

13. An appliance as claimed in claim 12 wherein the two members may have different surface areas and/or thicknesses.

14. An appliance as claimed in any preceding claim wherein the actuator (24;56) is a bimetallic actuator, more preferably a snap acting actuator.

15. An appliance as claimed in any preceding claim wherein the actuator (24;56) is part of a thermally sensitive control unit, more preferably part of an integrated control and connector system.

16. An appliance as claimed in any preceding claim wherein the channel (8;54;62) is a continuous channel and extends around the entire periphery of the base (2).

17. An appliance as claimed in any of claims 1 to 15 wherein the channel (8;54;62) is formed so as to extend only partially around the periphery of the base (2).

18. An appliance as claimed in any of claims 1 to 15 wherein the channel (62) is provided with one or more baffles (66) arranged within the channel (62).

19. An appliance as claimed in any preceding claim wherein the channel (8;54;62) is formed in a one-piece base, for example by drawing or pressing.

20. An appliance as claimed in any of claims 1 to 18 wherein the channel (8;54;62) is fabricated, for example by attaching an outer wall to an L-shaped flange formed the base (2) of the heating chamber (12).

21. An appliance as claimed in claim 20 wherein the outer wall is of a different material to the rest of the base (2).

22. An appliance as claimed in any preceding claim wherein the channel (8;54;62) is preformed in the base (2) prior to assembly of the appliance.

## Patentansprüche

1. Elektrische Wassererhitzungsvorrichtung, wobei die Vorrichtung eine Wassererhitzungskammer (12) mit einer beheizten Basis (2) aufweist, wobei die Basis (2) mit einem Kanal (8; 54; 62) ausgestattet ist, der sich um wenigstens einen Teil ihres Außenumfangs herum erstreckt, **gekennzeichnet durch** einen wärmeempfindlichen Aktuator (24; 56), der im thermischen Kontakt mit einer Wand (14, 16, 18) des Kanals (8; 54; 62) angebracht ist und in dem Falle, dass Flüssigkeit in der Vorrichtung kocht, betätigbar ist.

2. Vorrichtung nach Anspruch 1, in welcher der Kanal (8; 54; 62) ein Verhältnis von Tiefe zu radialer Breite aufweist, welches größer als 1, vorzugsweise größer als 3, stärker bevorzugt größer als 5 ist.

3. Vorrichtung nach Anspruch 1 oder 2, in welcher der Kanal (8; 54, 62) an seiner Oberseite eine Breite aufweist, welche kleiner als 10% und stärker bevorzugt kleiner als 5% des Basisdurchmessers ist.

4. Vorrichtung nach einem der vorhergehenden Ansprüche, in welcher der Aktuator (24) direkt an Wänden (14, 16, 18) oder gegen die Wände (14, 16, 18) des Kanals angebracht ist.

5. Vorrichtung nach einem der Ansprüche 1 bis 3, in welcher der Aktuator (24; 56) an einer Wärmebrücke (20; 50) oder gegen eine Wärmebrücke (20; 50) angebracht ist, die an einer oder mehreren Wänden (14, 16, 18) des Kanals (8; 54; 62) angebracht ist.

6. Vorrichtung nach Anspruch 5, in welcher das Wärmebrückenelement (20; 50) aus einem Material mit- hoher Wärmeleitfähigkeit, beispielsweise aus Kupfer oder Aluminium gebildet ist.

7. Vorrichtung nach Anspruch 6, in welcher das Wärmebrückenelement (20; 50) mit der Wand/den Wänden (14, 16, 18) verbunden, beispielsweise gelötet oder geschweißt, ist.

8. Vorrichtung nach Anspruch, 6 oder 7, in welcher das Wärmebrückenelement (20; 50) so geformt ist, dass es der Form des Aktuators (24; 56) folgt.

9. Vorrichtung nach einem der Ansprüche 4 bis 8, in welcher der Aktuator (24; 56) oder die Wärmebrücke (20; 50) in Kontakt mit einer oder mit beiden der Boden- oder Radialaußenwand (16, 18; 52) des Kanals (8; 54; 62) angeordnet ist.

10. Vorrichtung nach einem der vorhergehenden Ansprüche, in welcher der Kanal (54) mit einem Kühlelement (58) versehen ist, welches an diesem in dem Bereich des Aktuators (56) angebracht ist.

11. Vorrichtung nach Anspruch 10, direkt oder indirekt abhängig von Anspruch 5, in welcher das Wärmebrückenelement (50) mit einem Teil vorgesehen ist, der von einer Wand des Kanals (54) im Abstand angeordnet ist, um die Abführung von Wärme von diesem zu ermöglichen.

12. Vorrichtung nach Anspruch 10, direkt oder indirekt abhängig von Anspruch 5, in welcher ein separates Kühlelement vorgesehen ist.

13. Vorrichtung nach Anspruch 12, in welcher die beiden Elemente unterschiedliche Oberflächen und/oder Dicken aufweisen können.

14. Vorrichtung nach einem der vorhergehenden Ansprüche, in welcher der Aktuator (24; 56) ein Bimetallaktuator, stärker bevorzugt ein Klickschaltaktuator ist.

15. Vorrichtung einem der vorhergehenden Ansprüche, in welcher der Aktuator (24; 56) Teil einer wärmeempfindlichen Steuer-/Regeleinheit, vorzugsweise Teil eines Systems mit integrierter Steuerung/Regelung und Anschlusselement, ist.

16. Vorrichtung einem der vorhergehenden Ansprüche, in welcher der Kanal (8; 54; 62) ein kontinuierlicher Kanal ist und sich um den gesamten Umfang der Basis (2) herum erstreckt.

17. Vorrichtung nach einem der Ansprüche 1 bis 15, in welcher der Kanal (8; 54; 62) so ausgebildet ist, dass er sich nur zum Teil um den Umfang der Basis (2) herum erstreckt.

18. Vorrichtung nach einem der Ansprüche 1 bis 15, in welcher der Kanal (62) mit einer oder mehreren innerhalb des Kanals (62) angeordneten Ablenkelementen (66) versehen ist.

19. Vorrichtung einem der vorhergehenden Ansprüche, in welcher der Kanal (8; 54; 62) als eine einstückige Basis ausgebildet ist, z.B. durch Ziehen oder Pressen.

20. Vorrichtung nach einem der Ansprüche 1 bis 18, in welcher der Kanal (8; 54; 62) beispielsweise durch Anbringen einer Außenwand an einem in der Basis (2) der Erhitzungskammer (12) ausgebildeten, L-förmigen Flansch hergestellt ist.

21. Vorrichtung nach Anspruch 20, in welcher die Außenwand aus einem unterschiedlichen Material hergestellt ist als der Rest der Basis (2).

22. Vorrichtung einem der vorhergehenden Ansprüche, in welcher der Kanal (8; 54; 62) vor dem Zusammenbau der Vorrichtung in der Basis (2) vorgeformt ist.

## Revendications

1. Appareil de chauffage électrique de l'eau, ledit appareil présentant une chambre de chauffage de l'eau (12) ayant une base chauffée (2), ladite base (2) étant dotée d'un canal (8 ; 54 ; 62) qui s'étend autour d'une partie au moins de sa périphérie extérieure, **caractérisé par** un actionneur sensible à la chaleur (24 ; 56) monté en contact thermique avec une paroi (14, 16, 18) dudit canal (8 ; 54 ; 62) et étant opérationnel dans le cas où le liquide qui se trouve dans l'appareil bout.

2. Appareil selon la revendication 1, dans lequel le canal (8 ; 54; 62) présente un rapport de la profondeur sur la largeur radiale supérieur à un, de préférence supérieur à 3, et de manière plus préférée supérieur à 5.

3. Appareil selon la revendication 1 ou 2, dans lequel le canal (8 ; 54 ; 62) présente une largeur, au niveau de sa partie supérieure, inférieure à 10 %, et de manière plus préférée inférieure à 5 %, du diamètre de la base.

4. Appareil selon l'une quelconque des revendications précédentes, dans lequel l'actionneur (24) est monté directement sur, ou contre, les parois (14, 16, 18) du canal.

5. Appareil selon l'une quelconque des revendications 1 à 3, dans lequel l'actionneur (24 ; 56) est monté sur, ou contre, un pont thermique (20 ; 50) qui est fixé sur une ou plusieurs parois (14,16,18) du canal (8 ; 54 ; 62).

6. Appareil selon la revendication 5, dans lequel l'élément de pont thermique (20 ; 50) est réalisé dans un matériau qui présente une conductivité thermique élevée, par exemple en cuivre ou en aluminium.

7. Appareil selon la revendication 6, dans lequel l'élément de pont thermique (20 ; 50) est fixé, par exemple par brasage ou soudage, sur la ou les parois (14, 16, 18) du canal.

8. Appareil selon la revendication 6 ou 7, dans lequel l'élément de pont thermique (20 ; 50) est mis en forme de manière à s'adapter à la forme de l'actionneur (24 ; 56).

9. Appareil selon l'une quelconque des revendications 4 à 8, dans lequel l'actionneur (24 ; 56) ou le pont thermique (20 ; 50) est agencé en contact avec l'une, ou les deux, des parois inférieure ou extérieure de manière radiale, (16 ; 18 ; 52) du canal (8 ; 54 ; 62).

10. Appareil selon l'une quelconque des revendications précédentes, dans lequel le canal (54) est équipé d'un élément de refroidissement (58) qui y est attaché dans la région de l'actionneur (56).

11. Appareil selon la revendication 10, selon qu'elle dépend directement ou indirectement de la revendication 5, dans lequel l'élément de pont thermique (50) est équipé d'une partie qui est éloignée d'une paroi du canal (54) afin de permettre à la chaleur de se dissiper de là.

12. Appareil selon la revendication 10, selon qu'elle dépend directement ou indirectement de la revendication 5, dans lequel un élément de refroidissement séparé est fourni.

13. Appareil selon la revendication 12, dans lequel les deux éléments peuvent présenter des surfaces et / ou des épaisseurs différentes.

14. Appareil selon l'une quelconque des revendications précédentes, dans lequel l'actionneur (24; 56) est un actionneur bimétallique, de manière plus préférée un actionneur à rupture brusque.

15. Appareil selon l'une quelconque des revendications précédentes, dans lequel l'actionneur (24 ; 56) fait partie d'une unité de commande sensible à la chaleur, de manière plus préférée d'un système de commande et de connecteur intégré.

16. Appareil selon l'une quelconque des revendications précédentes, dans lequel le canal (8 ; 54 ; 62) est un canal continu qui s'étend autour de toute la périphérie de la base (2).

17. Appareil selon l'une quelconque des revendications 1 à 15, dans lequel le canal (8 ; 54 ; 62) est formé de manière à ne s'étendre que partiellement autour de la périphérie de la base (2).

18. Appareil selon l'une quelconque des revendications précédentes 1 à 15, dans lequel le canal (62) est équipé d'une ou plusieurs cloisons (66) agencées à l'intérieur du canal (62).

19. Appareil selon l'une quelconque des revendications précédentes, dans lequel le canal (8 ; 54 ; 62) est formé dans une base d'une seule pièce, par exemple par étirage ou par pressage.

20. Appareil selon l'une quelconque des revendications 1 à 18, dans lequel le canal (8 ; 54 ; 62) est fabriqué, par exemple, en fixant une paroi extérieure sur une bride en forme de L formée dans la base (2) de la chambre de chauffage (12).

21. Appareil selon la revendication 20, dans lequel la paroi extérieure est réalisée dans un matériau différent du reste de la base (2).

22. Appareil selon l'une quelconque des revendications précédentes, dans lequel le canal (8 ; 54 ; 62) est préformé dans la base (2) avant l'assemblage de l'appareil.
